# EUROPÄISCHE PATENTSCHRIFT

(11) **EP 0 314 236 B1**
(45) Veröffentlichungstag und Bekanntmachung des Hinweises auf die Patenterteilung: **24.08.1994**
(21) Anmeldenummer: 88202322.9
(22) Anmeldetag: 18.10.1988
(51) Int. Cl.: H04L 5/00

(54) **Verfahren zum Übertragen von Informationen sowie Anordnung zur Durchführung des Verfahrens**
Method and circuit for information transmission
Procédé et dispositif de transmission d'informations

(30) Priorität: 28.10.1987 DE 3736466
(43) Veröffentlichungstag der Anmeldung: 03.05.1989
(73) Patentinhaber: Philips Patentverwaltung GmbH, 22335 Hamburg (DE); Philips Electronics N.V., 5621 BA Eindhoven (NL)
(72) Erfinder: Metzler, Ernst, D-2850 Bremerhaven-W. (DE)
(74) Vertreter: Poddig, Dieter, Dipl.-Ing.

(56) Entgegenhaltungen:
- EP-A- 0 112 126
- FR-A- 2 357 118
- US-A- 4 504 945

## Beschreibung

Die Erfindung betrifft ein Verfahren zum Übertragen von Informationen zwischen zwei von mehreren Stationen, die alle über eine Schreibleitung und eine davon getrennte Leseleitung zur seriellen Datenübertragung miteinander verbunden sind, wobei die Schreibleitung nach Durchlaufer aller Stationen am Ende mit der Leseleitung verbunden ist und durch eine am Anfang der Schreibleitung eingespeiste periodische Synchronisierinformation eine zeitliche Rahmenstruktur gebildet wird, die mehrere Datenwörter umfaßt, wobei die Datenwörter an der gleichen Stelle in aufeinanderfolgenden Rahmen je einen Datenkanal bilden, sowie eine Anordnung zur Durchführung dieses Verfahrens.

Ein derartiges Verfahren ist beispielsweise aus der DE-A-34 27 891 bekannt. Jeder belegte Datenkanal stellt eine Verbindung von einer Station zu einer anderen Station dar, d.h. es werden jeweils nur Informationen von der einen Station zur anderen Station übertragen.

Ein entsprechendes Verfahren ist auch aus der EP-A-0 112 126 bekannt. Dort ist eine der Stationen in besonderer Weise ausgestaltet, so daß sie periodisch eine Kopfinformation (Lokomotive) auf die Schreibleitung aussendet, der eine Anzahl Zeitschlitze (Zug) folgen, und jede Station, die auszusendende Information enthält, überträgt diese Information in dem nächsten freien Zeitschlitz auf die Schreibleitung. Nach Durchlaufen aller Stationen wird die Schreibleitung zu allen Stationen als Leseleitung zurückgeleitet, so daß jede Station die für sie bestimmte Information von der Leseleitung ablesen kann.

Häufig sind zwei Stationen jedoch derart miteinander verbunden, daß sie Informationen austauschen, d.h. auch die andere Station sendet gleichzeitig Informationen zur einen Station zurück. Dies erfolgt üblicherweise in einem zweiten Datenkanal. Dadurch sind also für den gleichzeitigen wechselseitigen Informationsaustausch zwischen zwei Stationen auch zwei Datenkanäle erforderlich, so daß bei begrenzter Anzahl von Datenkanälen die Anzahl von Stationen, die gleichzeitig Informationen aussenden können, begrenzt ist.

Aus der FR-A-2 357 118 ist eine Anordnung für eine Vollduplex-Übertragung von binären Daten drahtlos über Funk zwischen zwei Stationen bekannt. Anstelle eines Zeitmultiplex- oder Frequenzmultiplex-Verfahrens wird die Funkantenne gleichzeitig für die Übertragung in beide Übertragungsrichtungen benutzt, wobei die Daten mittels Frequenzmodulation derselben Trägerfrequenz übertragen werden, so daß die Daten für beide Übertragungsrichtungen überlagert auf derselben Antenne erscheinen. Um die empfangenen Daten aus diesem überlagerten Antennensignal zurückgewinnen zu können, wird dieses Antennensignal demoduliert, wodurch ein ternäres Signal entsteht. Dieses wird in ein binäres Signal umgesetzt und mit dem gesendeten Signal der betreffenden Station logisch verknüpft. Damit ist also eine drahtlose Verbindung zwischen zwei Punkten auf derselben Trägerfrequenz möglich.

Aufgabe der Erfindung ist es, ein Verfahren der eingangs genannten Art anzugeben, das die einzelnen Datenkanäle effektiver ausnutzt und damit mehr Verbindungen zwischen Stationen ermöglicht.

Diese Aufgabe wird erfindungsgemäß dadurch gelöst, daß zur Ermöglichung der gleichzeitigen Übertragung von Informationen zwischen zwei Stationen in demselben Kanal in jeder dieser beiden Stationen die auf der eingehenden Schreibleitung ankommende Information mit der eigenen auszusendenden Information umkehrbar verknüpft und das Verknüpfungsergebnis auf der ausgehenden Schreibleitung weitergesendet wird, wobei die eigene auszusendende Information zwischengespeichert wird, und die auf der Leseleitung empfangene Information mit der gespeicherten eigenen Information verknüpft wird, um die von der jeweils anderen Station auszusendende Information zu erhalten.

Auf diese Weise wird auf der Schreibleitung nach der in Übertragungsrichtung gesehen zweiten Station eine Verknüpfung von beiden auszusendenden Informationen der beiden Stationen übertragen, die dann über die Leseleitung zu beiden Stationen nacheinander zurückgeführt wird, wobei jede Station nun die ausgesendete Information der jeweils anderen Station zurückgewinnen kann, da die darin vorhandene eigene Information gespeichert und damit noch vorhanden ist und aus der gemischten Information quasi wieder herausgenommen werden kann.

Das erfindungsgemäße Verfahren hat eine gewisse Ähnlichkeit mit der verschlüsselten Übertragung von Information, wobei die auszusendende Information mit einer festgelegten Schlüsselinformation verknüpft und zum Empfänger übertragen wird, wo diese Schlüsselinformation ebenfalls bekannt ist, so daß die zu empfangende Nutzinformation aus der verschlüsselten Information zurückgewonnen werden kann. Beim erfindungsgemäßen Verfahren erfolgt jedoch nicht eine Verknüpfung mit einer festen Schlüsselinformation, sondern mit der jeweils ankommenden Nutzinformation, so daß es auf überraschende Weise möglich ist, einen einzigen Datenkanal doppelt auszunutzen, d.h. für die Informationsübertragung zwischen zwei Stationen in beiden Richtungen.

Eine umkehrbare Verknüpfung zweier Informationen ist auf verschiedene Weise möglich. Eine besonders einfache Realisierung besteht nach einer Ausgestaltung des erfindungsgemäßen Verfahrens darin, daß die Verknüpfung eine Exklusiv-ODER-Verknüpfung ist. Dadurch ist die Verwendung derselben Verknüpfung sowohl für die Schreibleitung als auch für die Leseleitung möglich.

Eine Anordnung zur Durchführung des erfindungsgemäßen Verfahrens ist dadurch gekennzeichnet, daß in jeder Station die eingehende Schreibleitung mit einem Eingang einer ersten Verknüpfungsanordnung verbunden ist, von der ein zweiter Eingang mit einer Quelle eigener auszusendender Information verbunden ist und deren Ausgang die ausgehende Schreibleitung speist, und daß in jeder Station die Leseleitung mit einem Eingang einer zweiten Verknüpfungsanordnung verbunden ist, von der ein zweiter Eingang über einen Speicher mit der Quelle eigener auszusendender Information verbunden ist und deren Ausgang die von der jeweils anderen Station auszusendende Information abgibt. Eine einfache Verwirklichung der Verknüpfungsanordnung ist nach einer weiteren Ausgestaltung der Erfindung dadurch gekennzeichnet, daß die erste und die zweite Verknüpfungsanordnung je ein Exklusiv-ODER-Glied ist.

Ausführungsbeispiele der Erfindung werden nachstehend anhand der Zeichnung näher erläutert. Es zeigen:
- Fig. 1: ein Übertragungssystem mit mehreren Stationen, die über jeweils eine getrennte Schreibleitung und Leseleitung miteinander verbunden sind,
- Fig. 2: den wesentlichen Teil des inneren Aufbaues von zwei als Beispiel herangezogenen Stationen.

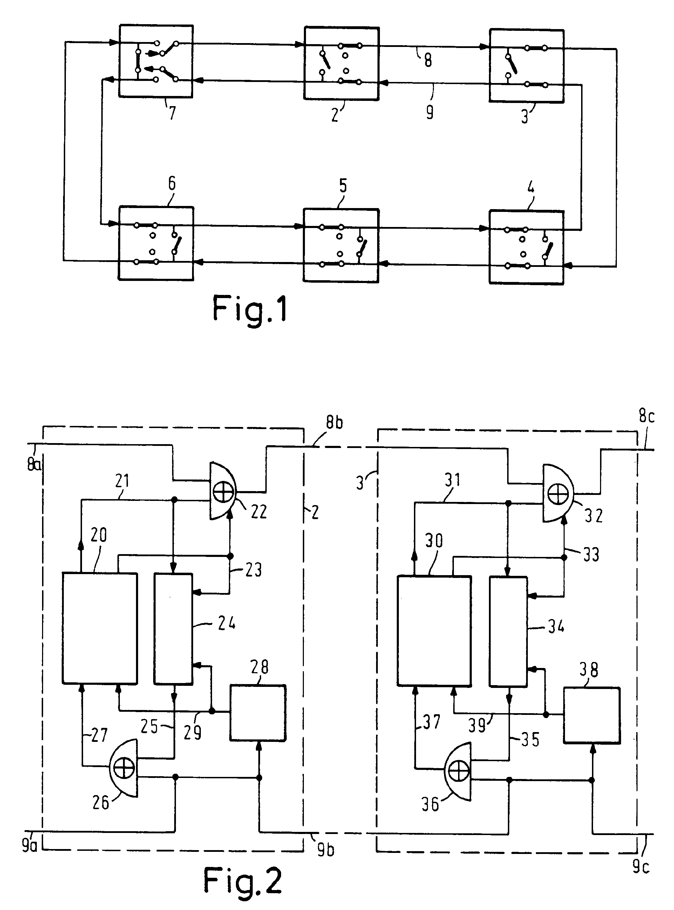

In Fig. 1 sind eine Anzahl Stationen 2 bis 7 über eine Schreibleitung 8 und eine Leseleitung 9 miteinander verbunden. Sowohl die Schreib- als auch die Leseleitung besteht im einfachsten Falle aus einem einzelnen Draht oder auch einer einfachen Lichtleiter-Übertragungsstrecke, über die Daten rein seriell übertragen werden. In den Stationen 2 bis 7 sind nur die wichtigsten Teile der Übertragungsstrecke angegeben, nämlich zwei Umschalter in dem Übertragungsweg jeder der beiden Leitungen 8 und 9 sowie ein Schalter, der die beiden Leitungen verbinden kann. In der Station 7 sind die beiden Leiter tatsächlich miteinander verbunden, und der Umschalter für die Schreibleitung 8 ist mit einem nicht dargestellten Generator zur Erzeugung von Synchronisierinformation für die zeitliche Rahmenstruktur auf der Schreibleitung 8 verbunden, während die Leseleitung 9 in der Station 7 mit einem Abschluß verbunden ist. Außerdem ist die Schreibleitung 8 in jeder Station mit einer Sendeeinrichtung für auszusendende Information und die Leseleitung 9 mit einer Empfangseinrichtung zum Lesen der Information verbunden. Wenn eine Station in einem Datenkanal innerhalb der Rahmenstruktur eine Information über die Schreibleitung 8 aussendet, durchläuft diese Information alle Stationen, bis sie in der Station 7 auf die Leseleitung umgekoppelt wird und nunmehr wiederum alle Stationen durchläuft, einschließlich der Station, von der die Information ausgesendet wurde. Mit bekannten Adressierungs- und Zuordnungsverfahren kann somit jede Station zu jeder anderen Station Informationen übermitteln.

Wenn nun angenommen wird, daß beispielsweise die beiden Stationen 2 und 3 gleichzeitig Informationen miteinander austauschen wollen, so kann die Station 2 jeweils ein Datenwort in einem Datenkanal auf der Schreibleitung 8 aussenden, und die Station 3 kann jeweils ein Datenwort in einem anderen Datenkanal aussenden. Beide Datenwörter durchlaufen nun auf der Schreibleitung 8 die Stationen 4, 5 und 6 und werden in der Station 7 auf die Leseleitung 9 gekoppelt, so daß die ausgesendeten Datenwörter wieder die Stationen 6, 5 und 4 durchlaufen und schließlich in der Station 3 bzw. 2 empfangen werden.

In Fig. 2 sind nun die zwei beispielhaft angenommenen Stationen 2 und 3, zwischen denen selbstverständlich noch andere Stationen liegen können, als Blockschaltbild mit den wichtigsten Elementen dargestellt, mittels derer die gleichzeitige gegenseitige Informationsübertragung über denselben Datenkanal möglich ist. Beide Stationen sind im wesentlichen gleich aufgebaut, so daß zunächst nur der Aufbau der Station 2 näher erläutert wird.

Diese enthält eine Verarbeitungsanordnung 20, die die eigenen auszusendenden Informationen auf der Leitung 21 erzeugt und die über die Leitung 27 empfangenen Informationen verarbeitet. Die Leitung 21 führt auf ein Exklusiv-ODER-Glied 22, dessen anderer Eingang mit der eingehenden Schreibleitung 8a gekoppelt ist. Das Ausgangssignal des Exklusiv-ODER-Gliedes 22 wird mittels nicht näher dargestellter Elemente mit einem Taktsignal verknüpft, das von der Verarbeitungseinheit 20 erzeugt und über die Leitung 23 zugeführt wird, und das getaktete Ausgangssignal wird über die ausgehende Schreibleitung 8b abgegeben. Die Information auf der Leitung 21 wird ferner einem Speicher 24 zugeführt und dort ebenfalls mit dem Taktsignal auf der Leitung 23 eingeschrieben. Dieser Speicher 24 ist zweckmäßig ein sogenannter FIFO-Speicher, der die eingeschriebene Information in der gleichen Reihenfolge wie beim Einschreiben mit einem vom Einschreibtakt unabhängigen Auslesetakt auf der Leitung 29 über die Leitung 25 abgibt.

Die Leitung 25 führt auf den einen Eingang eines weiteren Exklusiv-ODER-Gliedes 26, dessen anderer Eingang mit der eingehenden Leseleitung 9b gekoppelt ist, und das Ausgangssignal des Exklusiv-ODER-Gliedes 26 wird über die Leitung 27 der Verarbeitungseinheit 20 zugeführt. Ferner ist noch ein Taktregenerator 28 vorgesehen, der aus den Informationen auf der Leseleitung 9b den Datentakt wieder herstellt und als Taktsignal auf der Leitung 29 abgibt, die außer zum Speicher 24 auch zur Verarbeitungseinheit 20 führt.

Die Station 3 ist im wesentlichen ebenso aufgebaut wie die Station 2, wobei die Verarbeitungseinheit 30 der Verarbeitungseinheit 20, die Leitung 31 der Leitung 21 usw. entsprechen.

Es wird nun angenommen, daß die beiden Stationen gleichzeitig je ein Datenwort gegenseitig austauschen wollen, und zwar
die Station 2 an die Station 3 das Datenwort 01100110 und
die Station 3 an die Station 2 das Datenwort 11110000.
Ferner sei angenommen, daß die Zuteilung eines Datenkanals für diesen Datenaustausch bereits nach bekannten Methoden vorgenommen worden ist.

Auf der eingehenden Schreibleitung 8a der Station 2 ist dieser Datenkanal noch leer, d.h. er enthält beispielsweise lauter Nullen. Deren Verknüpfung mit der auszusendenden Information auf der Leitung 21 in dem Exklusiv-ODER-Glied 22 ergibt nun
- eingehende Schreibleitung 8a: 00000000
- Datenwort auf Leitung 21: 01100110
- ausgehende Schreibleitung 8b: 01100110.

Diese Information gelangt nun in der Station 3 auf den einen Eingang des Exklusiv-ODER-Gliedes 32 und wird mit den Daten auf der Leitung 31 verknüpft:
- eingehende Schreibleitung 8b: 01100110
- Datenwort auf Leitung 31: 11110000
- ausgehende Schreibleitung 8c: 10010110.

Dies ist also die Information bzw. das Datenwort auf der Schreibleitung 8c in dem betreffenden Datenkanal, und dieses Datenwort wird in der bereits früher beschriebenen Weise auf die Leseleitung gekoppelt und erscheint somit auf der eingehenden Leseleitung 9c der Station 3, die mit einem Eingang des Exklusiv-ODER-Gliedes 36 verbunden ist. Deren anderer Eingang erhält über die Leitung 35 vom Speicher 34 die zu einem früheren Zeitpunkt auf der Leitung 31 erschienene auszusendende Information, so daß sich folgendes ergibt:
- eingehende Leseleitung 9c: 10010110
- Datenwort auf Leitung 35: 11110000
- Datenwort auf Leitung 37: 01100110.

Damit wird über die Leitung 37 der Verarbeitungseinheit 30 also das von der Station 2 ausgesendete Datenwort zugeführt.

Das auf der Leseleitung 9c ankommende Datenwort ist nun unverändert auch auf der eingehenden Leseleitung 9b der Station 2 vorhanden und wird dort dem einen Eingang des Exklusiv-ODER-Glied 26 zugeführt, dessen anderer Eingang vom Speicher 24 über die Leitung 25 das von der Station 2 früher ausgesandte Datenwort empfängt, so daß sich folgendes ergibt:
- eingehende Leseleitung 9b: 10010110
- Datenwort auf Leitung 25: 01100110
- Datenwort auf Leitung 27: 11110000.

Damit empfängt also die Verarbeitungseinheit 20 über die Leitung 27 das von der Station 3 ausgesandte Datenwort.

Auf diese Weise sind also in einem einzigen Datenkanal zwei Datenwörter gleichzeitig übertragen worden.

Wenn nun in einem anderen Fall nur von der Station 3 ein Datenwort zur Station 2 übertragen werden soll, ohne daß diese letztere Informationen aussenden will, empfängt das Exklusiv-ODER-Glied 22 über die Leitung 21 lediglich Nullen, so daß auf der Schreibleitung 8b bei der Station 3 in dem für die Übertragung vorgesehenen Datenkanal nur Nullen erscheinen, und damit wird über die ausgehende Schreibleitung 8c der Station 3 die auf der Leitung 31 zugeführte Information unverändert übertragen. In entsprechender Weise kommt diese Information über die eingehende Leseleitung 9b in der Station 2 an und wird dort in dem Exklusiv-ODER-Glied 26 mit nur Nullen von der Leitung 25 verknüpft, so daß die auf der Leseleitung 9b empfangene Information unverändert über die Leitung 27 der Verarbeitungseinheit 20 zugeführt wird. Daraus ist zu ersehen, daß durch die Exklusiv-ODER-Glieder 22 und 26 bzw. 32 und 36 usw. die normale Datenübertragung, bei der in einem Datenkanal lediglich eine Station Datenwörter überträgt, nicht beeinträchtigt wird.

## Patentansprüche

1. Verfahren zum Übertragen von Informationen zwischen zwei von mehreren Stationen, die alle über eine Schreibleitung und eine davon getrennte Leseleitung zur seriellen Datenübertragung miteinander verbunden sind, wobei die Schreibleitung nach Durchlaufen aller Stationen am Ende mit der Leseleitung verbunden ist und durch eine am Anfang der Schreibleitung eingespeiste periodische Synchronisierinformation eine zeitliche Rahmenstruktur gebildet wird, die mehrere Datenwörter umfaßt, wobei die Datenwörter an der gleichen Stelle in aufeinanderfolgenden Rahmen je einen Datenkanal bilden,
dadurch gekennzeichnet, daß zur Ermöglichung der gleichzeitigen Übertragung von Informationen zwischen zwei Stationen in demselben Kanal in jeder dieser beiden Stationen die auf der eingehenden Schreibleitung ankommende Information mit der eigenen auszusendenden Information umkehrbar verknüpft und das Verknüpfungsergebnis auf der ausgehenden Schreibleitung weitergesendet wird, wobei die eigene auszusendende Information zwischengespeichert wird, und die auf der Leseleitung empfangene Information mit der gespeicherten eigenen Information verknüpft wird, um die von der jeweils anderen Station auszusendende Information zu erhalten.

2. Verfahren nach Anspruch 1,
dadurch gekennzeichnet, daß die Verknüpfung eine Exklusiv-ODER-Verknüpfung ist.

3. Anordnung zum Übertragen von Informationen zwischen zwei von mehreren Stationen, die alle über eine Schreibleitung und eine davon getrennte Leseleitung zur seriellen Datenübertragung miteinander verbunden sind, wobei die Schreibleitung nach Durchlaufen aller Stationen am Ende mit der Leseleitung verbunden ist und durch eine am Anfang der Schreibleitung eingespeiste periodische Synchronisierinformation eine zeitliche Rahmenstruktur gebildet wird, die mehrere Datenwörter umfaßt, wobei die Datenwörter an der gleichen Stelle in aufeinanderfolgenden Rahmen je einen Datenkanal bilden, zur Durchführung des Verfahrens nach Anspruch 1 oder 2,
dadurch gekennzeichnet, daß in jeder Station (2, 3...) die eingehende Schreibleitung (8a) mit einem Eingang einer ersten Verknüpfungsanordnung (22) verbunden ist, von der ein zweiter Eingang mit einer Quelle (20) eigener auszusendender Information verbunden ist und deren Ausgang die ausgehende Schreibleitung (8b) speist, und daß in jeder Station (2, 3...) die Leseleitung (9) mit einem Eingang einer zweiten Verknüpfungsanordnung (26) verbunden ist, von der ein zweiter Eingang über einen Speicher (24) mit der Quelle (20) eigener auszusendender Information verbunden ist und deren Ausgang die von der jeweils anderen Station (3, 2,...) auszusendende Information abgibt.

4. Anordnung nach Anspruch 3,
dadurch gekennzeichnet, daß die erste und die zweite Verknüpfungsanordnung (22, 26) je ein Exklusiv-ODER-Glied ist.

## Claims

1. Method for transmitting information between two of a plurality stations all interconnected for serial data transmission by a write line and a read line separate therefrom, the write line, having passed through all the stations, at the end being linked to the read line and a time-dependent frame structure being formed by a periodic synchronizing signal fed at the beginning of the write line, the frame structure comprising a plurality of data words which form each a data channel at the same position in consecutive frames, characterized in that, for enabling simultaneous information transmission to take place between two stations through the same channel, the information arriving through the incoming write line at each of these two stations is reversibly linked to its own information to be transmitted, and the result of the linkage is sent back through the outgoing write line, while its own information to be sent out is buffered and the information received through the read line is linked to its own stored information, in order to obtain the information to be sent from the other station.

2. Method as claimed in Claim 1, characterized in that the linking means is an exclusive-OR gate.

3. Arrangement for implementing the method as claimed in Claim 1 or 2, for transmitting information between two of a plurality stations all interconnected for serial data transmission by a write line and a read line separate therefrom, the write line, having passed through all the stations, at the end being linked to the read line and a time-dependent frame structure being formed by a periodic synchronizing signal fed at the beginning of the write line, the frame structure comprising a plurality of data words which form each a data channel at the same position in consecutive frames, characterized in that at each station (2, 3 ...) the incoming write line (8a) is connected to an input of a first linking means (22) whose second input is connected to a source (20) of its own information to be sent out and whose output feeds the outgoing write line (8b), and in that at each station (2, 3 ...) the read line (9) is connected to an input of a second linking means (26) whose second input is connected via a memory (24) to the source (20) of its own information to be sent out and whose output delivers the information to be sent out by the other station (3, 2 ...).

4. Arrangement as claimed in Claim 3, characterized in that the first and the second linking means (22, 26) are exclusive-OR gates.

## Revendications

1. Procédé de transmission d'informations entre deux de plusieurs stations, qui sont toutes interconnectées via une ligne d'écriture et une ligne de lecture séparée de la précédente pour transmettre des données en série, étant entendu que la ligne d'écriture est connectée à la ligne de lecture, à la fin, après parcours de toutes les stations et que, par une information de synchronisation périodique injectée au début de la ligne d'écriture, est formée une structure de trame temporelle qui contient plusieurs mots de données, les mots de données formant au même endroit dans des trames successives, chaque fois, un canal de données, caractérisé en ce que, pour permettre la transmission simultanée d'informations entre deux stations dans le même canal, dans chacune de ces deux stations, les informations arrivant par la ligne d'écriture entrante sont combinées de manière réversible avec les informations proprement dites à émettre et le résultat de la combinaison logique est réémis par la ligne d'écriture sortante, les informations proprement dites à émettre faisant l'objet d'un stockage intermédiaire, et les informations reçues sur la ligne de lecture sont combinées avec les informations proprement dites mémorisées pour recevoir les informations à émettre respectivement par l'autre station.

2. Procédé selon la revendication 1, caractérisé en ce que le moyen de combinaison est un moyen OU exclusif.

3. Dispositif de réalisation du procédé de transmission d'informations entre deux de plusieurs stations, qui sont toutes interconnectées via une ligne d'écriture et une ligne de lecture séparée de la précédente pour transmettre des données en série, étant entendu que la ligne d'écriture est connectée à la ligne de lecture, à la fin, après parcours de toutes les stations et que par une information de synchronisation périodique injectée au début de la ligne d'écriture, est formée une structure de trame temporelle, qui contient plusieurs mots de données, les mots de données formant au même endroit dans des trames successives, chaque fois un canal de données, caractérisé en ce que, dans chaque station (2, 3, ...), la ligne d'écriture entrante (8a) est connectée à une entrée d'un premier dispositif de combinaison (22) dont une deuxième entrée est connectée à une source d'informations proprement dites à émettre et dont la sortie alimente la ligne d'écriture sortante (8b), et que, dans chaque station, la ligne de lecture (2, 3, ...) est connectée à une entrée d'un deuxième dispositif de combinaison (26), dont une deuxième entrée est connectée via une mémoire à la source (20) d'informations proprement dites à recevoir et dont la sortie délivre les informations à recevoir respectivement de l'autre station (3, 2, ...).

4. Dispositif selon la revendication 3, caractérisé en ce que le premier et le deuxième dispositif de combinaison (22, 26) sont respectivement des éléments OU exclusif.
